# EUROPEAN PATENT SPECIFICATION

(11) **EP 2 602 340 B1**
(45) Date of publication and mention of the grant of the patent: **12.06.2019**
(21) Application number: 11814292.6
(22) Date of filing: 03.08.2011
(51) Int. Cl.: C22C 38/00, C21D 8/12, C21D 9/46, C22C 38/04, C22C 38/60, H01F 1/18, C21D 1/773, C21D 6/00, C21D 8/02, C21D 10/00, C22C 38/02, C22C 38/06, C22C 38/08, C22C 38/34

(54) **ORIENTED ELECTROMAGNETIC STEEL PLATE AND PRODUCTION METHOD FOR SAME**
ORIENTIERTES ELEKTROMAGNETISCHES STAHLBLECH UND HERSTELLUNGSVERFAHREN DAFÜR
TÔLE D'ACIER ÉLECTROMAGNÉTIQUE ORIENTÉE ET SON PROCÉDÉ DE PRODUCTION

(30) Priority: 06.08.2010 JP 2010177619
(43) Date of publication of application: 12.06.2013
(73) Proprietor: JFE Steel Corporation, Tokyo 100-0011 (JP)
(72) Inventor: OMURA, Takeshi, Tokyo 100-0011 (JP); YAMAGUCHI, Hiroi, Tokyo 100-0011 (JP); OKABE, Seiji, Tokyo 100-0011 (JP)
(74) Representative: Grünecker Patent- und Rechtsanwälte PartG mbB
(86) International application number: PCT/JP2011/004410
(87) International publication number: WO 2012/017655

(56) References cited:
- EP-A2- 0 260 927
- JP-A- 2 163 381
- JP-A- 5 051 645
- JP-A- 5 295 446
- JP-A- 6 136 449
- JP-A- 63 125 620
- JP-A- H05 311 241
- JP-A- 2009 235 473
- US-A- 3 985 583
- US-A1- 2005 112 377

## Description

### TECHNICAL FIELD

The present invention relates to a grain oriented electrical steel sheet that is preferably used for iron core materials such as transformers, and a method for manufacturing the same.

### BACKGROUND ART

Grain oriented electrical steel sheets, which are mainly used as iron cores of transformers, are required to have excellent magnetic properties, in particular, less iron loss.
To meet this requirement, it is important that secondary recrystallized grains are highly aligned in the steel sheet in the (110)[001] orientation (or so-called the Goss orientation) and impurities in the product steel sheet are reduced. Additionally, there are limitations to control crystal orientation and reduce impurities in terms of balancing with manufacturing cost, and so on. Therefore, some techniques have been developed for introducing non-uniformity to the surfaces of a steel sheet in a physical manner and reducing the magnetic domain width for less iron loss, namely, magnetic domain refining techniques.

For example, JP 57-002252 B (Patent Document 1) proposes a technique for reducing iron loss of a steel sheet by irradiating a final product steel sheet with laser, introducing a high dislocation density region to the surface layer of the steel sheet and reducing the magnetic domain width. JP 06-072266 B (Patent Document 2) proposes a technique for controlling the magnetic domain width by means of electron beam irradiation. Moreover, EP 0 260 927 A2 (Patent document 3) discloses a method of manufacturing a grain oriented electrical streel sheet comprising a forsterite film on its surface that is subjected to strain introduction by means of an electron beam treatment.

### RELATED ART DOCUMENTS

### PATENT DOCUMENTS

Patent Document 1: JP 57-002252 B
Patent Document 2: JP 06-072266 B
Patent Document 3: EP 0 260 927 A2

### DISCLOSURE OF THE INVENTION

### (Problem to be Solved by the Invention)

However, when a grain oriented electrical steel sheet that has been subjected to the above-mentioned magnetic domain refining treatment is assembled into an actual transformer, it may produce significant noise.

The present invention has been developed under these circumstances. An object of the present invention is to provide a grain oriented electrical steel sheet that may exhibit excellent low noise and low iron loss properties when assembled as an actual transformer, along with an advantageous method for manufacturing the same.

### (Means for Solving the Problem)

The inventors of the present invention have analyzed the cause of an increase in noise when using a grain oriented electrical steel sheet subjected to magnetic domain refinement treatment as an actual transformer. As a result, the inventors found that an increase in transformer noise is caused by a reduction in the thickness of a forsterite film (a film composed mainly of Mg₂SiO₄) in the strain-introduced portion when thermal strain is introduced for magnetic domain refinement. In this respect, the inventors also revealed that noise degradation could be prevented by appropriately adjusting a ratio of a film thickness of the forsterite film on a strain-introduced side of the steel sheet (Wa) to a film thickness of the forsterite film on a non-strain-introduced side of the steel sheet (Wb).
Further, as a result of the study on conditions under which an iron loss reduction effect provided by magnetic domain refinement treatment is maximized, it was found that both an average width of magnetic domain discontinuous portion in a surface of the steel sheet on the strain-introduced side and an average width of magnetic domain discontinuous portion in a surface of the steel sheet on the non-strain-introduced side have to be adjusted within a proper range. As used herein, the term strain-introduced side indicates the side on which electron beam has been irradiated, and non-strain-introduced side refers to the side on which electron beam has not been irradiated.
The present invention has been accomplished based on these findings.

The present invention provides a grain oriented electrical steel sheet according to claim 1 and a method for manufacturing a grain oriented electrical steel sheet according to claim 2.

### (Effect of the Invention)

According to the present invention, it is possible to provide a grain oriented electrical steel sheet that allows an actual transformer assembled therefrom to effectively maintain the effect of reducing iron loss by means of magnetic domain refinement using electron beam. Therefore, the actual transformer may exhibit excellent low noise properties, while maintaining excellent low iron loss properties.

### BRIEF DESCRIPTION OF THE DRAWINGS

The present invention will be further described below with reference to the accompanying drawings, wherein:
FIG. 1 illustrates a cross-section for measuring the thickness of a forsterite film; and
FIG. 2 illustrates the result of observing magnetic domains of the steel sheet.

### BEST MODE FOR CARRYING OUT THE INVENTION

The present invention will be specifically described below.
In the present invention, one of the measures to be taken to mitigate an increase in noise when using a grain oriented electrical steel sheet as an actual transformer that has been subjected to strain application and magnetic domain refinement treatment is to satisfy all of the three points given below.

### <Control of the thickness of a forsterite film on the strain-introduced side>

The first point is control of the thickness of a forsterite film where strain is introduced. Control of the thickness of a forsterite film is important for the reasons explained below.

A forsterite film on a surface of the steel sheet applies tension to the steel sheet. A variation in the thickness of this forsterite film leads to a non-uniform tension distribution of the steel sheet. The non-uniform tension distribution results in a distortion in the magnetostrictive vibration waveform of the steel sheet, which causes an increase in noise. As a result, noise will increase with a superimposed harmonic component. Accordingly, in order to mitigate this increase in noise, it is important to mitigate a reduction in the thickness of the forsterite film at the time of introduction of thermal strain. That is, a ratio (Wa/Wb) of a film thickness of the forsterite film on a strain-introduced side (Wa) to a film thickness of the forsterite film on a non-strain-introduced side (Wb) should be 0.5 or higher, preferably 0.7 or higher.

Besides, the thickness of the forsterite film on each side of the steel sheet before the introduction of strain is usually the same. Thus, the maximum value of Wa/Wb is about 1.

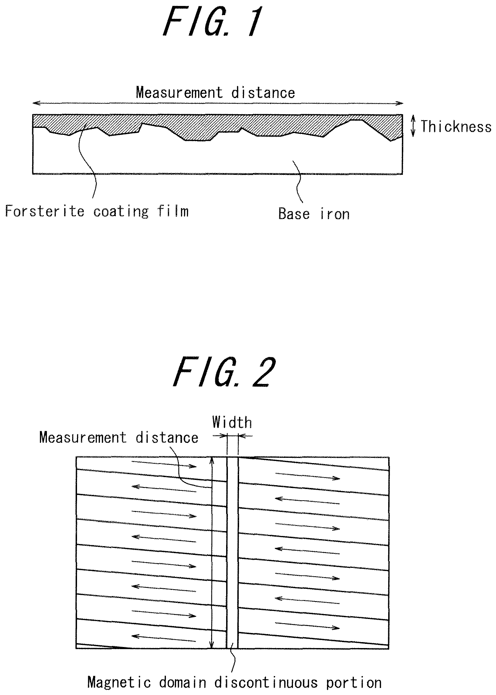

In addition, FIG. 1 is a schematic diagram illustrating a cross-section of a steel sheet having a forsterite film. The forsterite film appears to be non-uniform in thickness and have significant irregularities as viewed on a short periodic basis. However, the thickness of the forsterite film may be determined from an average of thickness measurements by using a sufficiently large measurement distance. Specifically, the thickness of the forsterite film may be determined by cutting a sample from a cross-section of the steel sheet, determining an area of the forsterite film over a predetermined measurement distance (preferably 1 mm) (using, preferably, SEM observation and image analysis), and calculating an average of thickness measurements of the film on that surface.

To satisfy the above-described ratio (Wa/Wb), it is important to mitigate a reduction in the thickness of the forsterite film where thermal strain is applied as mentioned above. Means for mitigating this reduction will be described below.
Above all, it is important to form a good forsterite film. As used herein, a good forsterite film means a forsterite film that has fewer gaps due to cracking and thus is highly densified. In addition, what is the most influential factor among those causing damage, such as cracking, to the forsterite film is the tension to be applied to the steel sheet during flattening annealing. If this tension is strong, the forsterite film is damaged and cracking occurs, for example. Thus, in an annealing furnace where the steel sheet has high temperature and thus is more sensitive to tension, it is necessary to control the tension at 15 MPa (1.5 kgf/mm²) or lower.

On the other hand, the present invention requires the above-described tension to be 5 MPa (0.5 kgf/mm²) or higher. This is because the tension of less than 5 MPa results in inadequate shape correction of the steel sheet. In addition, it is necessary to control the degree of vacuum during the electron beam irradiation. It is generally believed that a higher degree of vacuum is better for electron beam irradiation. However, the inventors of the present invention has found that allowing an adequate amount of oxygen to be left during the electron beam irradiation is effective in mitigating the reduction of the forsterite film. While the mechanism for this has not been clarified, the inventors of the present invention believe as follows: the oxidation of the steel sheet due to the residual oxygen at the time of introduction of thermal strain might have some influence on maintenance of the film thickness of the forsterite film. In order to mitigate a reduction in the film thickness of the forsterite film, the degree of vacuum is to be within a range of 0.1 to 5 Pa. If the degree of vacuum is below 0.1 Pa, it is not possible to mitigate the reduction of the forsterite film. Alternatively, if the degree of vacuum is above 5 Pa, it is not possible to apply thermal strain to the steel sheet in an effective manner. The degree of vacuum is more preferably within a range of 0.5 to 3 Pa.

### <Control of magnetic domain discontinuous portions in a surface of the steel sheet on the strain-introduced side and in a surface of the steel sheet on the non-strain-introduced side>

The second point is control of magnetic domain discontinuous portions in a surface of the steel sheet on the strain-introduced side and in a surface of the steel sheet on the non-strain-introduced side, respectively. While this control of the thickness of the forsterite film may somewhat mitigate an increase in noise, an actual transformer is required to exhibit even lower noise properties and still lower iron loss properties. In other words, to reduce the iron loss of a transformer, it is also important to reduce the iron loss of the material. That is, to make full use of the magnetic domain refinement effect in the material, the following are important:
(i) To introduce strain until magnetic domain discontinuous portions are also produced in a surface of the steel sheet on the strain-introduced side and in a surface of the steel sheet on the non-strain-introduced side, respectively; and
(ii)To minimize the width of each magnetic domain discontinuous portion because strain introduction leads to degradation in hysteresis loss.

The following are specific conditions under which the above items (i) and (ii) are satisfied: an average width of a magnetic domain discontinuous portion in a surface of the steel sheet on the strain-introduced side is to be 150 to 300 µm; and an average width of a magnetic domain discontinuous portion in a surface of the steel sheet on the non-strain-introduced side is to be 250 to 500 µm. That is, the present invention satisfies the above item (i) by defining an average width of a magnetic domain discontinuous portion in a surface of the steel sheet on the non-strain-introduced side, and satisfies the above item (ii) by setting the upper limit of each average width. Further, the lower limit of each average width is also set because the magnetic domain refinement effect cannot be obtained for a width smaller than the lower limit. It should be noted that if the maximum tension during the flattening annealing and the degree of vacuum during the electron beam irradiation are not satisfied as described earlier in relation to the first point, it is extremely difficult to satisfy the above-described heat-affected width without reducing the thickness of the forsterite film.

It should be noted here that what is important in the present invention is the average widths of magnetic domain discontinuous portions, rather than the average irradiation width. That is, when heat is introduced to the steel sheet, it is diffused in every direction, such as the sheet thickness direction or sheet width direction. Accordingly, each magnetic domain discontinuous portion that is affected by such heat usually tends to be wider than the irradiation width. Additionally, for the same reason, each magnetic domain discontinuous portion on the non-strain-introduced side has a width larger than that of each magnetic domain discontinuous portion on the strain-introduced side.

In the present invention, the width of a magnetic domain discontinuous portion may be obtained by visualizing a magnetic domain structure by the Bitter method using magnetic colloid so that discontinuous portions formed by the electron beam irradiation can be identified (see FIG. 2), and furthermore, by measuring the widths of magnetic domain discontinuous portions over a predetermined measurement distance (preferably 20 mm) to calculate an average of the width measurements. FIG. 2 is a schematic diagram illustrating the magnetic domain structure of the grain oriented electrical steel sheet after the magnetic domain refinement treatment, where main magnetic domains are oriented in the horizontal direction and electron beam is irradiated in the vertical direction at the center of the figure at a substantially right angle to the horizontal direction. A magnetic domain discontinuous portion indicates a region where the structure of main magnetic domain is disrupted by electron beam irradiation, and that substantially corresponds to a region affected by the heat caused by the electron beam irradiation.

### <High degree of alignment of crystal grains of the material with the easy axis of magnetization>

The third point is the high degree of alignment of crystal grains of the material with the easy axis of magnetization.

Regarding the transformer noise, i.e., magnetostrictive vibration, the oscillation amplitude becomes smaller as the degree of alignment of crystal grains of the material with the easy axis of magnetization becomes higher. Therefore, for noise reduction, a magnetic flux density B₈, which gives an indication of the degree of alignment of crystal grains of the material with the easy axis of magnetization, should be 1.92 T or higher. In this case, if the magnetic flux density B₈ is less than 1.92 T, rotational motion of magnetic domains to align parallel to the excitation magnetic field during the magnetization process causes a large magnetostriction. This results in an increase in transformer noise. In addition, the higher the degree of the crystal grain alignment, the greater the magnetic domain refinement effect. In view of iron loss reduction, the magnetic flux density B₈ should also be 1.92 T or higher.

The strain introduction process in the present invention is limited to a method by means of electron beam that may reduce damage to the film at a strain-introduced portion. In this case, when electron beam irradiation is performed, electron beam is irradiated in a direction transverse to the rolling direction, preferably at 60° to 90° to the rolling direction, and the irradiation interval of the electron beam is preferably about 3 to 15 mm. In addition, electron beam is to be irradiated in a spot-like or linear fashion under the following conditions: acceleration voltage = 10 to 200 kV; current = 0.1 to 100 mA; and beam diameter = 0.01 to 0.5 mm. A preferred beam diameter is 0.01 to 0.3 mm.

Next, the conditions of manufacturing a grain oriented electrical steel sheet according to the present invention will be specifically described below.
In the present invention, a slab for a grain oriented electrical steel sheet may have any chemical composition that allows for secondary recrystallization. In addition, if an inhibitor, e.g., an AlN-based inhibitor is used, Al and N may be contained in an appropriate amount, respectively, while if a MnS/MnSe-based inhibitor is used, Mn and Se and/or S may be contained in an appropriate amount, respectively. Of course, these inhibitors may also be used in combination. In this case, preferred contents of Al, N, S and Se are: Al: 0.01 to 0.065 mass %; N: 0.005 to 0.012 mass %; S: 0.005 to 0.03 mass %; and Se: 0.005 to 0.03 mass %, respectively.

Further, the present invention is also applicable to a grain oriented electrical steel sheet having limited contents of Al, N, S and Se without using an inhibitor.
In this case, the amounts of Al, N, S and Se are preferably limited to: Al: 100 mass ppm or less: N: 50 mass ppm or less; S: 50 mass ppm or less; and Se: 50 mass ppm or less, respectively.

The basic elements and other optionally added elements of the slab for a grain oriented electrical steel sheet of the present invention will be specifically described below.

### <C: 0.08 mass % or less>

C is added for improving the texture of a hot-rolled sheet. However, C content exceeding 0.08 mass % increases the burden to reduce C content to 50 mass ppm or less where magnetic aging will not occur during the manufacturing process. Thus, C content is preferably 0.08 mass % or less. Besides, it is not necessary to set up a particular lower limit to C content because secondary recrystallization is enabled by a material without containing C.

### <Si: 2.0 to 8.0 mass %>

Si is an element that is useful for increasing electrical resistance of steel and improving iron loss. Si content of 2.0 mass % or more has a particularly good effect in reducing iron loss. On the other hand, Si content of 8.0 mass % or less may offer particularly good formability and magnetic flux density. Thus, Si content is preferably within a range of 2.0 to 8.0 mass %.

### <Mn: 0.005 to 1.0 mass %>

Mn is an element that is advantageous for improving hot formability. However, Mn content less than 0.005 mass % has a less addition effect. On the other hand, Mn content of 1.0 mass % or less provides a particularly good magnetic flux density to the product sheet. Thus, Mn content is preferably within a range of 0.005 to 1.0 mass %.

Further, in addition to the above elements, the slab may also contain the following elements as elements for improving magnetic properties:
at least one element selected from: Ni: 0.03 to 1.50 mass %; Sn: 0.01 to 1.50 mass %; Sb: 0.005 to 1.50 mass %; Cu: 0.03 to 3.0 mass %; P: 0.03 to 0.50 mass %; Mo: 0.005 to 0.10 mass %; and Cr: 0.03 to 1.50 mass %.
Ni is an element that is useful for further improving the texture of a hot-rolled sheet to obtain even more improved magnetic properties. However, Ni content of less than 0.03 mass % is less effective in improving magnetic properties, whereas Ni content of 1.5 mass % or less increases, in particular, the stability of secondary recrystallization and provides even more improved magnetic properties. Thus, Ni content is preferably within a range of 0.03 to 1.5 mass %.

Sn, Sb, Cu, P, Mo and Cr are elements that are useful for improvement of the magnetic properties, respectively. However, if any of these elements is contained in an amount less than its lower limit described above, it is less effective for improving the magnetic properties, whereas if contained in an amount equal to or less than its upper limit described above, it gives the best growth of secondary recrystallized grains. Thus, each of these elements is preferably contained in an amount within the above-described range. The balance other than the above-described elements is Fe and incidental impurities that are incorporated during the manufacturing process.

Then, the slab having the above-described chemical composition is subjected to heating before hot rolling in a conventional manner. However, the slab may also be subjected to hot rolling directly after casting, without being subjected to heating.

Further, the hot rolled sheet is subjected to hot rolled sheet annealing. A main purpose of the hot rolled sheet annealing is to improve the magnetic properties by dissolving the band texture generated by hot rolling to obtain a primary recrystallization texture of uniformly-sized grains, and thereby further developing a Goss texture during secondary recrystallization annealing. As this moment, in order to obtain a highly-developed Goss texture in a product sheet, a hot rolled sheet annealing temperature is in the range of 800°C to 1100°C. If a hot rolled sheet annealing temperature is lower than 800°C, there remains a band texture resulting from hot rolling, which makes it difficult to obtain a primary recrystallization texture of uniformly-sized grains and impedes a desired improvement of secondary recrystallization. On the other hand, if a hot rolled sheet annealing temperature exceeds 1100°C, the grain size after the hot rolled sheet annealing coarsens too much, which makes it difficult to obtain a primary recrystallization texture of uniformly-sized grains.

After the hot rolled sheet annealing, the sheet is subjected to cold rolling once, or twice or more with intermediate annealing performed therebetween, to be finished to a final sheet thickness. The sheet is subjected to subsequent decarburization (combined with recrystallization annealing). Then, an annealing separator is applied to the sheet. After the application of the annealing separator, the sheet is subjected to final annealing for purposes of secondary recrystallization and formation of a forsterite film. It should be noted that the annealing separator is preferably composed mainly of MgO in order to form forsterite. As used herein, the phrase "composed mainly of MgO" implies that any well-known compound for the annealing separator and any property improvement compound other than MgO may also be contained within a range without interfering with the formation of a forsterite film intended by the invention.

After the final annealing, it is effective to subject the sheet to flattening annealing to correct the shape thereof. According to the present invention, insulation coating is applied to the surfaces of the steel sheet before or after the flattening annealing. As used herein, this insulation coating means such coating that may apply tension to the steel sheet to reduce iron loss (hereinafter, referred to as tension coating). Tension coating includes inorganic coating containing silica and ceramic coating by physical vapor deposition, chemical vapor deposition, and so on.

In the present invention, the grain oriented electrical steel sheet after the final annealing or tension coating as mentioned above is subjected to magnetic domain refining by irradiating the surfaces of the steel sheet with electron beam. The degree of vacuum during the electron beam irradiation may be controlled as mentioned above to make full use of the thermal strain application effect through the electron beam irradiation, while minimizing damage to the film.

According to the present invention, except the above-mentioned steps and manufacturing conditions, it is possible to apply a conventionally well-known method for manufacturing a grain oriented electrical steel sheet where magnetic domain refining treatment is performed by means of electron beam.

### [Experiment 1]

Steel slabs, each having a chemical composition containing the following elements, were manufactured by continuous casting: C: 0.08 mass %; Si: 3.1 mass %; Mn: 0.05 mass %; Ni: 0.01 mass %; Al: 230 mass ppm; N: 90 mass ppm; Se: 180 mass ppm; S: 20 mass ppm; O: 22 mass ppm; and the balance being Fe and incidental impurities. Then, each of these steel slabs was heated to 1400°C, subjected to hot rolling to be finished to a hot-rolled sheet having a sheet thickness of 2.0 mm, and then subjected to hot rolled sheet annealing at 1100°C for 120 seconds. Subsequently, each steel sheet was subjected to cold rolling to an intermediate sheet thickness of 0.65 mm, and then to intermediate annealing under the following conditions: degree of oxidation PH₂O/PH₂ = 0.32, temperature = 1000°C, and duration = 60 seconds. Subsequently, each steel sheet was subjected to hydrochloric acid pickling to remove subscales from the surfaces thereof, followed by cold rolling again to be finished to a cold-rolled sheet having a sheet thickness of 0.23 mm.

Then, each steel sheet was subjected to decarburization where it was retained at a degree of oxidation PH₂O/PH₂ of 0.50 and a soaking temperature of 830°C for 60 seconds. Then, an annealing separator composed mainly of MgO was applied to each steel sheet. Thereafter, each steel sheet was subjected to final annealing for the purposes of secondary recrystallization, formation of a forsterite film and purification under the conditions of 1200°C and 30 hours. Then, an insulation coating composed of 60% colloidal silica and aluminum phosphate was applied to each steel sheet, which in turn was baked at 800°C. This coating application process also serves as flattening annealing.
Thereafter, one side of each steel sheet was subjected to magnetic domain refinement treatment where it was irradiated with electron beam at irradiation width of 0.15 mm and irradiation interval of 5.0 mm in a direction perpendicular to the rolling direction. Then, each steel sheet was evaluated for magnetic properties as a product. The primary recrystallization annealing temperature was varied to obtain materials, each having a value of magnetic flux density B₈ of 1.90 to 1.95 T. In addition, electron beam was irradiated under different conditions with different beam current values and beam scanning rates. Then, each product was subjected to oblique shearing to be assembled into a three-phase transformer at 500 kVA, and then measured for its iron loss and noise in a state where it was excited at 50Hz and 1.7 T. This transformer has design values of iron loss and noise of 55 dB and 0.83 W/kg, respectively. The above-mentioned measurement results on iron loss and noise are shown in Table 1.

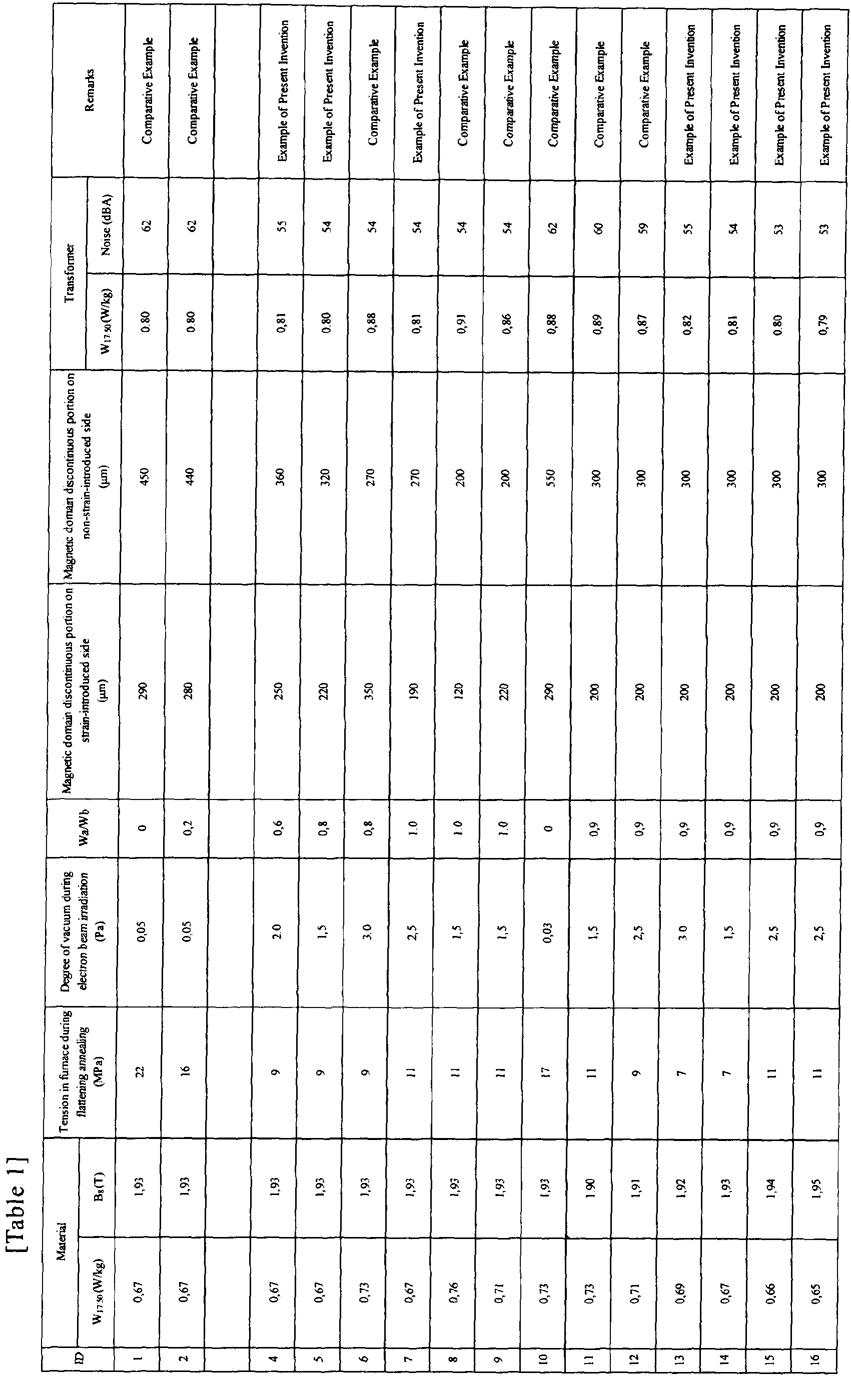

As shown in Table 1, each grain oriented electrical steel sheet, which was subjected to magnetic domain refining treatment by means of electron beam and falls within the scope of the present invention, produces low noise when assembled as an actual transformer and inhibits degradation in iron loss properties. The resulting iron loss and low noise properties are consistent with the design value.
In contrast, Comparative Examples of steel sample IDs 11 and 12, which are outside the scope of the present invention in terms of their magnetic flux densities, all failed to show either low noise properties or low iron loss properties. In addition, Comparative Examples of steel sample IDs 1, 2 and 10, each of which has a value of (Wa/Wb) less than 0.5, did not offer low noise properties. Further, Comparative Examples of steel sample IDs 6, 8 and 9, which are outside the scope of the present invention in terms of the average width of a magnetic domain discontinuous portion in a surface of the steel sheet either on the strain-introduced side or non-strain-introduced side, proved to exhibit inferior iron loss properties.

## Claims

1. A grain oriented electrical steel sheet comprising a forsterite film formed on a surface thereof, being subjected to strain introduction by means of electron beam and having a magnetic flux density B₈ of 1.92 T or higher,
wherein a ratio (Wa/Wb) of a film thickness of the forsterite film on a strain-introduced side of the steel sheet (Wa) to a film thickness of the forsterite film on a non-strain-introduced side of the steel sheet (Wb) is 0.5 or higher, and
wherein a magnetic domain discontinuous portion in a surface of the steel sheet on the strain-introduced side has an average width of 150 to 300 µm, and a magnetic domain discontinuous portion in a surface of the steel sheet on the non-strain-introduced side has an average width of 250 to 500 µm.

2. A method for manufacturing a grain oriented electrical steel sheet, the method comprising:
subjecting a slab for a grain oriented electrical steel sheet to hot rolling, hot rolled sheet annealing at a temperature of 800°C to 1100°C, and subsequently to cold rolling once, or twice or more with intermediate annealing performed therebetween, to be finished to a final sheet thickness;
subjecting the sheet to subsequent decarburization;
then applying an annealing separator composed mainly of MgO to a surface of the sheet before subjecting the sheet to final annealing;
subjecting the sheet to subsequent flattening annealing and tension coating; and
subjecting, after the final annealing or the tension coating, the sheet to magnetic domain refining treatment by means of electron beam irradiation in a direction transverse to the rolling direction using a acceleration voltage of 10 to 200 kV, a current of 0.1 to 100 mA and a beam diameter of 0.01 to 0.5 mm, wherein
(1) the degree of vacuum during the electron beam irradiation is 0.1 to 5 Pa, and
(2) a tension to be exerted on the steel sheet during flattening annealing is controlled at 5 to 15 MPa.

## Patentansprüche

1. Kornorientiertes Elektrostahlblech, das einen an einer Oberfläche desselben ausgebildeten Forsterit-Film umfasst, wobei es Einbringung von Dehnung mittels Elektronenstrahl unterzogen wird und eine magnetische Flussdichte B₈ von 1,92 T oder mehr hat,
wobei ein Verhältnis (Wa/Wb) einer Schichtdicke des Forsterit-Films an einer Seite (Wa) des Stahlblechs, an der Dehnung eingebracht ist, zu einer Schichtdicke des Forsterit-Films an einer Seite (Wb) des Stahlblechs, an der keine Dehnung eingebracht ist, 0,5 oder größer ist, und
ein Diskontinuitäts-Abschnitt magnetischer Domänen in einer Oberfläche des Stahlblechs an der Seite, an der Dehnung eingebracht ist, eine durchschnittliche Breite von 150 bis 300 µm hat, und ein Diskontinuitäts-Abschnitt magnetischer Domänen in einer Oberfläche des Stahlblechs an der Seite, an der keine Dehnung eingebracht ist, eine durchschnittliche Breite von 250 bis 500 µm hat.

2. Verfahren zum Herstellen eines kornorientierten Elektrostahlblechs, wobei das Verfahren umfasst:
an einer Bramme für ein kornorientiertes Elektrostahlblech Durchführen von Warmwalzen, von Glühen des warmgewalzten Blechs bei einer Temperatur von 800 °C bis 1100 °C und anschließendem einmaligem, zweimaligem oder häufigerem Kaltwalzen mit dazwischen durchgeführtem Zwischenglühen, zur Fertigbearbeitung auf eine abschließende Blechdicke;
anschließende Entkohlung des Blechs;
danach Aufbringen eines Glühseparators, der hauptsächlich aus MgO besteht, auf eine Oberfläche des Blechs vor Fertigglühen des Blechs;
anschließendes Flachglühen sowie Spannungs-Beschichten des Blechs; und
nach dem abschließenden Glühen oder dem Spannungs-Beschichten, Behandlung zur Verfeinerung magnetischer Domänen mittels Elektronenbestrahlung in einer Richtung quer zu der Walzrichtung unter Einsatz einer Beschleunigungsspannung von 10 bis 200 kV, eines Stroms von 0,1 bis 100 mA und eines Strahldurchmessers von 0,01 bis 0,5 mm, wobei
1) der Grad des Vakuums während der Elektronenbestrahlung 0,1 bis 5 Pa beträgt, und
2) eine auf das Stahlblech während des Flachglühens ausgeübte Zugspannung auf 5 bis 15 MPa gesteuert wird.

## Revendications

1. Tôle d'acier électrique à grains orientés comprenant un film de forstérite formé sur une surface de celle-ci, qui est soumise à une introduction de contrainte par l'intermédiaire d'un faisceau d'électrons et ayant une densité de flux magnétique B₈ de 1,92 T ou plus,
dans laquelle un rapport (Wa/Wb) entre une épaisseur de film du film de forstérite sur un côté à contrainte introduite de la tôle d'acier (Wa) et une épaisseur de film du film de forstérite sur un côté à contrainte non introduite de la tôle d'acier (Wb) est égal à 0,5 ou plus, et
dans laquelle une partie discontinue de domaine magnétique dans une surface de la tôle d'acier sur le côté à contrainte introduite a une largeur moyenne de 150 à 300 µm, et une partie discontinue de domaine magnétique dans une surface de la tôle d'acier sur le côté à contrainte non introduite a une largeur moyenne de 250 à 500 µm.

2. Procédé de fabrication d'une tôle d'acier électrique à grains orientés, le procédé comprenant les étapes consistant à :
soumettre une brame pour une tôle d'acier électrique à grains orientés à un laminage à chaud, à un recuit de tôle laminé à chaud à une température de 800°C à 1 100°C, puis à un laminage à froid une fois, ou deux fois ou plus de deux fois avec un recuit intermédiaire entre ceux-ci, pour être finie à une épaisseur de tôle finale ;
soumettre la tôle à une décarburation ultérieure ;
appliquer ensuite un séparateur de recuit composé principalement de MgO sur une surface de la tôle avant de soumettre la tôle à un recuit final ;
soumettre la tôle à un recuit d'aplatissement et à un revêtement sous tension ultérieurs ; et
soumettre, après le recuit final ou le revêtement sous tension, la tôle à un traitement d'affinage de domaine magnétique au moyen d'une irradiation de faisceau d'électrons dans une direction transversale à la direction de laminage en utilisant une tension d'accélération de 10 à 200 kV, un courant de 0,1 à 100 mA et un diamètre de faisceau de 0,01 à 0,5 mm, dans lequel
(1) le degré de vide pendant l'irradiation de faisceau d'électrons est compris entre 0,1 et 5 Pa, et
(2) une tension à exercer sur la tôle d'acier lors du recuit d'aplatissement est commandée entre 5 et 15 MPa.
